# FASCICULE DE BREVET EUROPEEN

(11) **EP 0 687 654 B1**
(45) Date de publication et mention de la délivrance du brevet: **09.09.1998**
(21) Numéro de dépôt: 95460025.0
(22) Date de dépôt: 13.06.1995
(51) Int. Cl.: C04B 18/10

(54) **Charge active pour béton**
Aktiver Füllstoff für Beton
Active filler for concrete

(30) Priorité: 13.06.1994 FR 9407408
(43) Date de publication de la demande: 20.12.1995
(73) Titulaire: OTV Omnium de Traitements et de Valorisation S.A., 94417 St Maurice Cédex (FR)
(72) Inventeur: Couturier, Jean, F-06400 Cannes (FR)
(74) Mandataire: Vidon, Patrice

(56) Documents cités:
- EP-A- 0 387 727
- EP-A- 0 389 328
- EP-A- 0 582 008

## Description

L'invention concerne le domaine du béton et, plus précisément se rapporte à une nouvelle charge destinée à être incorporée dans le béton, au moment de sa fabrication, afin d'en améliorer certaines des qualités.

Les fours d'incinération utilisés pour incinérer les boues provenant des stations d'épuration d'eaux usées rejettent des fumées qui ne doivent pas contenir de quantités de résidus volatils excédant un certain seuil fixé par dispositions réglementaires. Il est donc nécessaire de dépoussiérer ces fumées avant de les relâcher dans l'atmosphère.

Les résidus volatils récupérés dans les filtres des cheminées de fours d'incinération de boues de stations d'épuration se présentent sous la forme de micro-particules silico-alumineuses en grande majorité de taille inférieure à 100 µm dont l'analyse au microscope électronique montre un micro-relief leur conférant une surface spécifique élevée.

D'une façon générale ces résidus volatils ont bien sûr une composition chimique variable selon les boues de l'incinération desquelles ils résultent. Ils contiennent cependant toujours de la silice en quantité importante, de l'alumine, et des phosphates. Ils contiennent également généralement de la chaux (mais ne se présentant pas sous forme de chaux libre), de la magnésie, de la potasse, et des composés soufrés.

Ces résidus volatils ne connaissent actuellement aucune voie de valorisation. Seules des techniques d'immobilisation permettant de stocker plus facilement ces résidus volatils ont été proposés dans l'état de la technique.

Il a ainsi été proposé de vitrifier ces résidus, c'est-à-dire de les porter à une température de l'ordre de 1200 °C de façon à réaliser des blocs inertes, c'est-à-dire non susceptibles de réagir avec l'environnement, et pouvant être facilement stockés. Une telle technique s'est avérée trop coûteuse à mettre en oeuvre pour être raisonnablement envisagée, du fait de la quantité d'énergie nécessaire pour atteindre la température de vitrification.

Il a également été proposé dans l'état de la technique d'incorporer ces résidus volatils dans des matériaux plastiques afin de faciliter leur stockage en décharge. Une telle technique est également relativement coûteuse à mettre en oeuvre et aboutit également à une mise en décharge.

L'objectif de la présente invention est de proposer une nouvelle charge pour béton permettant d'améliorer certaines des qualités de ce matériau et permettant notamment d'inhiber au moins partiellement l'alcali réaction qui se produit dans les bétons et qui détériore leur aspect et leurs qualités au cours de leur vieillissement.

Un autre objectif de l'invention est de proposer une voie de valorisation des résidus volatils provenant des fours d'incinération des stations d'épuration et ainsi de supprimer le stockage de ces résidus en décharge sous forme de produits vitrifiés, plastifiés ou autres. Notamment, un objectif de l'invention est de proposer une voie de valorisation garantissant les impératifs de l'environnement.

Ces objectifs sont atteints grâce à l'invention qui concerne une charge active pour béton destinée à favoriser l'inhibition de l'alcali réaction susceptible d'altérer le béton au cours de son vieillissement, à améliorer la maniabilité du béton et à permettre un meilleur surfaçage au décoffrage, caractérisée en ce qu'elle est constituée par des résidus volatils silico-alumineux de fumées provenant d'au moins un four d'incinération de boues de stations d'épuration d'eaux usées, lesdits résidus volatils renfermant 5 à 20 % en poids de phosphates P₂O₅.

Il a en effet été découvert que de tels résidus volatils constituaient une excellente charge pour le béton. Ils apportent les fines nécessaires au bon développement des résistances lors de sa prise en masse et une meilleure maniabilité de celui-ci. De plus, les phosphates présents dans ses résidus à raison de 5 à 20 % en poids permettent d'inhiber ou à tout le moins de ralentir fortement l'alcali réaction se produisant dans le béton.

L'invention constitue donc une voie de valorisation intéressante de ces résidus. En France, les quantités de boues provenant des stations d'épuration des eaux usées sont d'environ un million de tonnes de matières sèches par an. Environ la moitié de ces boues est valorisée dans le domaine agricole tandis que 35 % sont stockés dans les décharges. La production de ces boues étant de plus en plus importante, les directives officielles tendent à diminuer l'accès aux décharges de telles boues. C'est la raison pour laquelle, une partie croissante de celles-ci est maintenant incinérée de façon à réduire à leur minimum le volume des résidus et les nuisances qui les accompagnent. Les quantités de résidus volatils récupérées à la sortie des fours d'incinération de ces boues sont donc également de plus en plus importantes. L'invention offre une solution au problème posé par l'augmentation de la production de ces résidus volatils.

L'utilisation de tels résidus volatils selon l'invention est susceptible de se substituer à celle des cendres volantes provenant des centrales thermiques à charbon, ci-après appelées cendres de charbon, largement utilisées dans la fabrication des bétons en tant que charge.

De telles cendres de charbon présentent une composition chimique et une structure physique fort différentes de celles des résidus volatils des fumées provenant de l'incinération des boues de stations d'épuration. En particulier, l'étude au microscope électronique montre que les cendres de charbon se présentent sous la forme de micro-particules sphériques alors que les résidus volatils en question montrent un micro-relief prononcé. D'un point de vue chimique, les résidus volatils provenant de l'incinération des boues présentent des quantités de silice sensiblement équivalentes aux cendres de charbon mais contiennent des phosphates alors que les cendres de charbons n'en contiennent pas. La présence de ces phosphates et la forme non-sphérique de tels résidus volatils rendaient non-évidente pour l'homme de l'art leur utilisation en tant que charge dans le béton. En particulier, l'homme du métier était amené à conclure que la porosité liée à la présence d'espaces libres entre les micro-particules agglomérées de tels résidus volatils était un empêchement pour l'utilisation de ceux-ci dans le cadre de la fabrication du béton. En effet, selon les règles de l'homme de l'art, l'accroissement de la quantité d'eau nécessaire à la prise en masse du béton conduit à une diminution de ses qualités mécaniques. Or, il a été découvert que non seulement une telle porosité ne constituait pas un obstacle à l'utilisation de tels résidus volatils en tant que charge active pour la fabrication du béton mais, qu'en plus, un telle utilisation conduisait à un avantage spécifique, à savoir, l'inhibition de l'alcali réaction se produisant au sein du béton et pouvant conduire à sa détérioration .

Bien que selon la présente invention, les résidus volatils provenant de l'incinération des boues de stations d'épuration puissent être utilisés quel que soit le four ayant servi à procéder à cette incinération, ce four est préférentiellement un four à lit de sable fluidisé. De tels fours permettent en effet une incinération très efficace des boues. Ils comprennent un lit de sable fluidisé par un flux d'air ascendant, préchauffé ou non. En régime permanent, le lit de sable, grâce au frottement entre les grains de sable, assure la dispersion des particules de boues, ce qui accélère les échanges thermiques. De tels fours présentent de plus l'avantage de conduire à l'obtention de résidus volatils renfermant une teneur élevée en silice SiO₂ résultant en partie de l'entraînement du passage des boues sur le lit de sable intégré dans ce type de four.

Préférentiellement, lesdits résidus volatils comprennent au moins 30 % en poids de silice SiO₂.

Avantageusement, lesdits résidus volatils comprennent un taux d'imbrûlés inférieur à 5 % en poids. En effet, bien que ce taux d'imbrûlés n'ait pas de conséquence directe sur les propriétés mécaniques du béton, il peut conduire à une modification de l'aspect de ceux-ci.

Préférentiellement, lesdits résidus volatils comprennent un taux d'imbrûlés inférieur à 2 % en poids.

L'invention concerne également un procédé de fabrication de béton consistant à mélanger un liant à base de ciment avec des agrégats, du type cailloux et/ou graviers et/ou sable, caractérisé en ce qu'il consiste à utiliser un liant incluant 25 à 50 % en poids d'une charge active telle que décrite ci-dessus.

Préférentiellement, ledit liant comprend également un adjuvant plastifiant. Un tel adjuvant plastifiant a pour objet de compenser la porosité des résidus volatils liés à leur forme comme expliqué ci-dessus.

Selon une variante intéressante du procédé, ledit adjuvant plastifiant est un sel de sodium. On pourra ainsi utiliser notamment l'aluminate de soude ou le silicate de soude. Préférentiellement, le silicate de soude sera employé car il constitue un sous-produit industriel pouvant être obtenu à moindre coût.

Avantageusement ledit adjuvant plastifiant est incorporé dans ledit béton à raison de 2 % à 15 % en poids par rapport au poids de liant du béton, le liant étant constitué par le ciment et la charge active.

Selon une variante, ledit béton est réalisé à partir d'agrégats "acides" (sables, graviers). En effet, on a constaté que l'utilisation de tels agrégats "acides" conduisaient à une action renforcée des phosphates sur l'inhibition de l'alcali réaction.

Enfin, l'invention couvre également les bétons incluant en tant que charge des résidus volatils provenant des fumées des fours d'incinération des boues de stations d'épuration d'eaux usées.

L'invention, ainsi que les différents avantages qu'elle présente seront plus facilement compris grâce à la description qui va suivre d'un exemple non limitatif de réalisation.

Des boues déshydratées provenant de diverses stations d'épuration d'eaux usées sont brûlées dans un four d'incinération à lit de sable fluidisé. Les boues sont brûlées pendant plus de 3 secondes à une température supérieure à 850°C garantissant la combustion complète des matières volatiles. Les résidus volatils des fumées de ce four sont récupérés au niveau des filtres de dépoussiérage des cheminées de celui-ci afin d'être utilisés conformément à la présente invention.

Ces résidus volatils présentent la composition chimique suivante, les pourcentages étant donnés en poids par rapport au poids total :

| | |
|---|---|
| SiO₂ | 53 % |
| P₂O₅ | 11,5 % |
| Al₂O₃ | 9,8 % |
| Fe₂O₃ | 3,8 % |
| Ti0₂ | 1 % |
| CaO | 14,5 % |
| MgO | 2,3 % |
| K₂O | 2,1 % |
| Na₂O | 0,9 % |
| SO₃ | 1,1 % |

Par ailleurs, ces résidus volatils présentent une perte au feu à 975°C de 1,8% en poids et une concentration en matières organiques imbrûlées inférieure à 2 % en poids. Ils présentent la granulométrie suivante :
moins de 40 µm : 47,7 %
entre 40 µm et 80 µm : 20,9 %
plus de 80 µm : 31,4 %

Enfin on notera que leur masse volumique est en moyenne de 2,50 g/cm³ et que leur surface spécifique BLAINE (par granulométrie laser) est de 2000 cm²/g.

Les chiffres ici cités correspondent à des résidus volatils bien précis obtenus dans un four d'incinération donné. Ces chiffres pourront varier de façon importante selon notamment l'origine et la nature des boues incinérées et si un autre four d'incinération ou une autre température d'incinération que ceux mentionnés ci-dessus sont utilisés. D'une manière indicative, les résidus volatils utilisables pour la présente invention présenteront généralement une composition entrant dans les fourchettes suivantes :

| | |
|---|---|
| SiO₂ | préférentiellement plus de 30 % |
| Al₂O₃ | 6 à 20 % |
| Fe₂O₃ | 5 à 15 % |
| CaO | 5 à 55 % |
| MgO | 1 à 5 % |
| K₂O | 0,7 à 10 % |
| Na₂O | 0,1 à 15 % |
| SO₃ | 0,1 à 3 % |

L'influence de l'ajout de tels résidus volatils (R.V.), sur les propriétés mécaniques du béton a été évaluée sur éprouvettes de mortier et dans les conditions fixées par la norme française NF P 18 505 établie pour tester les mortiers avec cendres de charbon. Il est en effet classique dans le domaine du béton de tester les résistances mécaniques n'ont pas sur le béton, qui inclut des agrégats pouvant être de tailles variables, mais sur un mortier à base d'un sable standardisé.

Les éprouvettes témoin ont été réalisées à partir d'un liant ne présentant pas de charge active selon l'invention mais seulement du ciment alors que les autres éprouvettes testées ont été réalisées avec un liant incluant 25 % en poids de la charge active selon l'invention.

Les résistances des ces éprouvettes en compression (Rc) et en traction (Rt) ont été testées à 3, 28 et 90 jours afin de les comparer à celles des éprouvettes témoins. On notera que, s'agissant d'éprouvettes de mortier, les résistances observées sont inférieures à celles qui seraient obtenues avec des bétons.

Les résultats obtenus sont donnés dans le tableau I ci-après :

**Tableau I**

| AGE (jours) | | 3 | 28 | 90 |
|---|---|---|---|---|
| Rc (M Pa) | Témoin | 33 | 60 | 71 |
| | Mortier 25 % de R.V. | 23 | 51 | 59 |
| Rt (M Pa) | Témoin | 7,5 | 10 | 10 |
| | Mortier 25 % de R.V. | 5,5 | 9 | 10 |

Ce tableau laisse apparaître que l'ajout de résidus volatils n'a pas d'influence notable sur la résistance en compression. L'indice d'activité correspondant au rapport de la résistance en compression du mortier avec résidus volatils sur la résistance en compression du mortier sans résidus volatils est de 85 % à 28 jours, et dépasse les 82 % imposés par la norme française NF P18505 établie pour les cendres de charbon.

Un béton incluant la charge active décrite ci-dessus a été réalisé selon un procédé de fabrication classique consistant à mélanger du gravier présentant un diamètre allant jusqu'à 25 mm avec un liant à base de ciment, en présence d'eau. Les proportions suivantes ont été utilisées pour un mètre cube de gravier :
300 kg de ciment,
40 kg de charge active selon l'invention
15 kg de silicate de soude.

Lors de la réalisation du béton, la charge active stockée dans un silo a été introduite directement dans un malaxeur par une vis sans fin (comme le ciment).

La résistance en compression du béton obtenu a été testée selon les méthodes classiques. Une résistance de 37 MPa à 28 jours a été observée, c'est-à-dire une résistance analogue à celles de bétons similaires ne contenant pas de charge active selon l'invention. Un tel test à permis de vérifier sur le béton les résultats obtenus sur les éprouvettes de mortier, à savoir que l'ajout d'une charge active constituée de résidus volatils provenant des fumées de fours d'incinération de boues de station d'épuration d'eaux usées n'avait pas d'influence notable sur les propriétés mécaniques des bétons ainsi réalisés.

La stabilité dimensionnelle d'un béton selon l'invention réalisé à partir d'un liant incluant 50% en poids de ciment et 50 % en poids de résidus volatiles a été testée selon la méthode LE CHATELIER. L'expansion constatée a été très faible et inférieure à 1 %.

Enfin, des essais de lixiviation ont été effectués sur des éprouvettes de mortier vieillies et non vieillies réalisées avec un liant contenant 25 % de résidus volatils (ci-après RV non vieillie et RV vieillie). Ces essais on été comparés à ceux effectués sur une éprouvette identique réalisée à partir d'un liant ne contenant que du ciment (éprouvette témoin). Les essais de lixiviation on été effectués selon la norme français NF X 31 210.

Les résultats obtenus sur le lixiviat obtenu après une lixiviation de 24 heures sont condensés dans le tableau II suivant, montrant la teneur du lixiviat en divers composants et métaux.

**Tableau II**

| Eléments (mg/l) | Témoin | R.V. non vieillie | R.V. vieillie |
|---|---|---|---|
| Chlorures | < 1 | <1 | 34 |
| Sulfates | <1 | <1 | 1 |
| Fraction soluble | 18360 | 16740 | 14610 |
| Al | 1,3 | 3,6 | 2,7 |
| Cd | 0,01 | 0,01 | 0,01 |
| Cr | 0,24 | 0,2 | 0,38 |
| Pb | 0,3 | 0,01 | 0,14 |
| Zn | 0,01 | 0,01 | 0,01 |
| Al | | | |

Les résultats obtenus sur la somme des trois lixiviats obtenus après trois lixiviations successives sont donnés dans le tableau III suivant.

**Tableau III**

| éléments (mg/l) | Témoin | R.V. non vieillie | R.V. vieillie |
|---|---|---|---|
| Chlorures | <3 | 37,4 | 42 |
| Sulfates | <3 | <3 | 3 |
| Fraction soluble | 42510 | 34240 | 31280 |
| Al | 12,6 | 27 | 26 |
| Cd | 0,03 | 0,03 | 0,03 |
| Cr | 0,82 | 0,82 | 0,91 |
| Pb | 0,06 | 0,11 | 0,22 |
| Zn | 0,07 | 0,03 | 0,04 |

Les tableaux II et III laissent apparaître une innocuité de l'utilisation des résidus volatils selon l'invention. En effet les quantités d'éléments obtenus après lixiviation sont toutes inférieures aux quantités maximales imposées par les normes en vigueur.

L'exemple de réalisation de l'invention ici présenté n'a pas pour objet de réduire la portée de celle-ci. En particulier, on notera que la composition des résidus volatils indiquée pourra varier en fonction de la nature des boues incinérées et du four utilisé pour ce faire. Il pourra aussi être envisagé d'utiliser des résidus volatils résultant de l'incinération de boues de stations d'épuration provenant d'autres fours que des fours à lit de sable fluidisé.

## Revendications

1. Charge active pour béton destinée à favoriser l'inhibition de l'alcali réaction susceptible d'altérer le béton au cours de son vieillissement, à améliorer la maniabilité du béton et à permettre un meilleur surfaçage au décoffrage, caractérisée en ce qu'elle est constituée par des résidus volatils silico-alumineux de fumées provenant d'au moins un four d'incinération de boues de stations d'épuration d'eaux usées, lesdits résidus volatils renfermant 5 à 20 % en poids de phosphates P₂O₅.

2. Charge active pour béton selon la revendication 1 caractérisée en ce que ledit four d'incinération est un four à lit de sable fluidisé.

3. Charge active pour béton selon les revendications 1 ou 2 caractérisée en ce qu'elles contiennent au moins 30 % en poids de silice SiO₂.

4. Charge active pour béton selon l'une des revendications 1 à 3 caractérisée en ce que lesdits résidus volatils comprennent un taux d'imbrûlés inférieur à 5 % en poids.

5. Charge active pour béton selon la revendication 4 caractérisée en ce que lesdits résidus volatils comprennent un taux d'imbrûlés inférieur à 2 % en poids.

6. Procédé de fabrication de béton consistant à mélanger un liant à base de ciment avec des agrégats, du type cailloux ou graviers, caractérisé en ce qu'il consiste à utiliser un liant incluant 25 à 50 % en poids d'une charge active selon l'une des revendications 1 à 5.

7. Procédé de fabrication de béton selon la revendication 6 caractérisé en ce que ledit liant comprend également un adjuvant plastifiant.

8. Procédé de fabrication de béton selon la revendication 7 caractérisé en ce que ledit adjuvant plastifiant est un sel de sodium.

9. Procédé de fabrication de béton selon la revendication 8 caractérisé en ce que ledit sel de sodium est du silicate de soude ou de l'aluminate de soude.

10. Procédé de fabrication de béton selon l'une des revendications 6 à 9 caractérisé en ce que ledit adjuvant plastifiant est incorporé dans ledit béton à raison de 2 % à 15% en poids de liant.

11. Procédé de fabrication de béton selon l'une des revendication 6 à 10 caractérisé en ce que lesdits agrégats sont des agrégats acides.

12. Béton caractérisé en ce qu'il inclut comme charge une charge active selon l'une des revendications 1 à 5.

## Claims

1. Active filler for concrete intended to promote inhibition of the alkali reaction liable to damage the concrete during ageing thereof, to improve the workability of the concrete and to permit better surfacing when the formwork is dismantled, characterised in that it consists of volatile alumino-silicate residues of flue gases coming from at least one furnace for incinerating sludge from waste water purification plants, said volatile residues containing from 5 to 20 wt.% of phosphates P₂O₅.

2. Active filler for concrete according to claim 1, characterised in that said incineration furnace is a fluidised sand bed furnace.

3. Active filler for concrete according to claim 1 or claim 2, characterised in that they contain at least 30 wt.% of silica SiO₂.

4. Active filler for concrete according to any one of claims 1 to 3, characterised in that said volatile residues comprise a combustion residue content of less than 5 wt.%.

5. Active filler for concrete according to claim 4, characterised in that said volatile residues comprise a combustion residue content of less than 2 wt.%.

6. Process for manufacturing concrete, comprising mixing a cement-based binding agent with aggregates, of the broken stone or gravel type, characterised in that it comprises using a binding agent which includes from 25 to 50 wt.% of an active filler according to any one of claims 1 to 5.

7. Process for manufacturing concrete according to claim 6, characterised in that said binding agent also comprises a plasticising additive.

8. Process for manufacturing concrete according to claim 7, characterised in that said plasticising additive is a sodium salt.

9. Process for manufacturing concrete according to claim 8, characterised in that said sodium salt is sodium silicate or sodium aluminate.

10. Process for manufacturing concrete according to any one of claims 6 to 9, characterised in that said plasticising additive is incorporated into said concrete in a proportion of from 2 to 15 wt.% of binding agent.

11. Process for manufacturing concrete according to any one of claims 6 to 10, characterised in that said aggregates are acid aggregates.

12. Concrete, characterised in that it includes as filler an active filler according to any one of claims 1 to 5.

## Patentansprüche

1. Aktivfüller für Beton, der das Hemmen der alkalischen Reaktion begünstigen soll, welche die Zersetzung des Betons im Laufe seiner Alterung verursachen könnte, der ferner die Handhabung des Betons verbessern und das Erhalten einer besseren Oberflächenstruktur bei der Ausschalung ermöglichen soll,
dadurch gekennzeichnet, daß er aus flüchtigen Silizium-Aluminium-Reststoffen besteht, die aus dem Rauch von mindestens einem Verbrennungsofen für Schlämme aus einer Abwasserkläranlage gewonnen werden, wobei diese flüchtigen Reststoffe 5 bis 20 Gewichts-% Phosphate P₂O₅ enthalten.

2. Aktivfüller für Beton gemäß Anspruch 1,
dadurch gekennzeichnet, daß es sich beim Verbrennungsofen um einen Sandwirbelschichtofen handelt.

3. Aktivfüller für Beton gemäß einem der Ansprüche 1 oder 2,
dadurch gekennzeichnet, daß er mindestens 30 Gewichts-% Kieselsäure SiO₂ enthält.

4. Aktivfüller für Beton gemäß einem der Ansprüche 1 bis 3,
dadurch gekennzeichnet, daß der Anteil an nicht verbrannten Stoffen in den flüchtigen Reststoffen weniger als 5 Gewichts-% beträgt.

5. Aktivfüller für Beton gemäß Anspruch 4,
dadurch gekennzeichnet, daß der Anteil an nicht verbrannten Stoffen in den flüchtigen Reststoffen weniger als 2 Gewichts-% beträgt.

6. Herstellungsverfahren für Beton, bestehend in der Mischung eines auf Zement aufbauenden Bindemittels mit Zusatzstoffen wie Schotter oder Kies,
dadurch gekennzeichnet, daß das verwendete Bindemittel 25 bis 50 Gewichts-% eines Aktivfüllers gemäß einem der Ansprüche 1 bis 5 enthält.

7. Herstellungsverfahren für Beton gemäß Anspruch 6,
dadurch gekennzeichnet, daß das Bindemittel ebenfalls einen als Verflüssiger wirkenden Zusatzstoff enthält.

8. Herstellungsverfahren für Beton gemäß Anspruch 7,
dadurch gekennzeichnet, daß der als Verflüssiger wirkende Zusatzstoff ein Natriumsalz ist.

9. Herstellungsverfahren für Beton gemäß Anspruch 8,
dadurch gekennzeichnet, daß es sich beim Natriumsalz um Sodasilikat oder um Sodaaluminat handelt.

10. Herstellungsverfahren für Beton gemäß einem der Ansprüche 6 bis 9,
dadurch gekennzeichnet, daß der als Verflüssiger wirkende Zusatzstoff dem Beton im Verhältnis von 2 bis 15 Gewichts-% als Bindemittel zugegeben wird.

11. Herstellungsverfahren für Beton gemäß einem der Ansprüche 6 bis 10, dadurch gekennzeichnet, daß die Zusatzstoffe saure Stoffe sind.

12. Beton, der dadurch gekennzeichnet ist, daß er als Füller einen Aktivfüller gemäß einem der Ansprüche 1 bis 5 enthält.
